# EUROPÄISCHE PATENTSCHRIFT

(11) **EP 1 702 147 B1**
(45) Veröffentlichungstag und Bekanntmachung des Hinweises auf die Patenterteilung: **12.09.2007**
(21) Anmeldenummer: 04803226.2
(22) Anmeldetag: 23.11.2004
(51) Int. Cl.: F01N 9/00, F01N 3/025, F02D 41/02

(54) **VERFAHREN ZUM BETREIBEN EINES PARTIKELFILTERS IM ABGASSTRANG EINER BRENNKRAFTMASCHINE EINES KRAFTFAHRZEUGS**
METHOD FOR OPERATING A PARTICLE FILTER IN THE EXHAUST GAS TRAIN OF AN INTERNAL COMBUSTION ENGINE IN A MOTOR VEHICLE
PROCEDE PERMETTANT DE FAIRE FONCTIONNER UN FILTRE A PARTICULES DANS LA VOIE D'ECHAPPEMENT DU MOTEUR A COMBUSTION INTERNE D'UN VEHICULE A MOTEUR

(30) Priorität: 18.12.2003 DE 10359395
(43) Veröffentlichungstag der Anmeldung: 20.09.2006
(73) Patentinhaber: DaimlerChrysler AG, 70327 Stuttgart (DE)
(72) Erfinder: BOEGNER, Walter, 71686 Remseck (DE); HERTZBERG, Andreas, 71706 Markgröningen (DE)
(86) Internationale Anmeldenummer: PCT/EP2004/013265
(87) Internationale Veröffentlichungsnummer: WO 2005/059328

(56) Entgegenhaltungen:
- EP-A- 1 205 228
- EP-A- 1 411 106
- DE-A1- 10 204 706
- DE-A1- 10 300 671
- PATENT ABSTRACTS OF JAPAN Bd. 1998, Nr. 06, 30. April 1998 (1998-04-30) & JP 10 033923 A (TOYOTA MOTOR CORP), 10. Februar 1998 (1998-02-10)

## Beschreibung

Die Erfindung betrifft ein Verfahren zum Betreiben eines Partikelfilters nach dem Oberbegriff des Anspruchs 1.

Aus der Offenlegungsschrift DE 101 54 261 A1 ist ein Verfahren zur Bestimmung der Beladung eines Partikelfilters bekannt. Bei diesem Verfahren werden Partikelfilter betrachtet, wie sie im Abgasstrang insbesondere von Fahrzeugdieselmotoren zur Ausfilterung von Rußpartikeln aus dem Abgas Verwendung finden. Auf oder in dem Partikelfilter sammeln sich die ausgefilterten Rußpartikel allmählich an, was zu einer zunehmenden Beladung des Partikelfilters und zu einem allmählichen Ansteigen des Strömungswiderstands des Partikelfilters führt. Damit verbunden ist ein Ansteigen des durch den Partikelfilter verursachten Abgasgegendrucks, was wiederum zu einer Verschlechterung des Motorbetriebs führt. Durch ein Abbrennen der angesammelten Rußpartikel kann die Rußbeladung des Partikelfilters wieder vermindert und das Strömungsverhalten verbessert werden.

Zur Partikelfilterbeladung trägt allerdings auch ein Ansammeln von Asche bei, die bei den Rußabbrandvorgängen nicht entfernt werden kann, da die Asche aus nichtbrennbaren anorganischen Substanzen besteht. Das in der DE 101 54 261 A1 beschriebene Verfahren ermöglicht es, durch Ermittlung des Druckverlustes über dem Partikelfilter zwischen der im Partikelfilter ange-sammelten Asche und der durch die im Partikelfilter angesam-melten Rußpartikel verursachten Beladung zu unterscheiden. Das Verfahren ermöglicht es auf diese Weise, den Erfolg eines Rußabbrandvorgangs zu ermitteln. Ein allmählicher Anstieg des Strömungswiderstands auf Grund der zunehmenden Aschebeladung kann durch das Verfahren jedoch nicht verhindert werden und führt letztendlich zu einem Unbrauchbarwerden des Partikel-filters.

Da allgemein davon ausgegangen wird, dass die Aschebeladung des Partikelfilters während des Fahrzeugbetriebs und insbesondere durch übliche Rußabbrandvorgänge nicht vermindert werden kann, wird in der DE 41 34 949 A1 vorgeschlagen, bei einem Werkstattaufenthalt des Fahrzeugs die im Partikelfilter angesammelte Asche durch Ausblasen entgegen der normalen Abgasströmungsrichtung zu entfernen. Somit wird ein auf Grund der Aschebeladung unzulässig erhöhter Strömungswiderstand rück-gängig gemacht und der Partikelfilter steht zum weiteren Gebrauch zur Verfügung. Das Verfahren ist jedoch verhältnismäßig aufwändig und erfordert eine Unterbrechung des Fahrbetriebs.

In der DE 103 00 671 A1 wird ein Verfahren vorgeschlagen, das neben teilweisen Regenerationsprozessen auch vollständige Regenerationsprozesse für einen Partikelfilter vorsieht, bei welchen verbleibende Russablagerungen komplett abgebrannt werden, so dass die Ascherückstände wieder durch den Filter hindurchtreten können und so vom Abgasstrom aus dem Partikelfilter herausgetragen werden, sofern sie kleiner als die Porengrösse des Filters sind.

Aufgabe der Erfindung ist es daher, ein Verfahren zum Betreiben eines Partikelfilters anzugeben, mit welchem die Aschebeladung des Partikelfilters im Fahrbetrieb des Fahrzeugs vermindert werden kann.

Die Erfindung löst diese Aufgabe mit den Merkmalen des Anspruchs 1. Erfindungsgemäß wird in einem Ascheverminderungsvorgang die Masse der nach einem Rußabbrand im Partikelfilter verbleibenden nichtbrennbaren Ascherückstände vermindert, indem dem Partikelfilter mit dem Abgas der Brennkraftmaschine ein reduzierend wirkender Stoff zugeführt und mit den Ascherückständen derart zur Reaktion gebracht wird, dass die Ascherückstände chemisch umgewandelt werden und dabei wenigstens nichtmetallische Bestandteile der Ascherückstände mit dem Abgas aus dem Partikelfilter entfernt werden.

Ascherückstände bestehen hauptsächlich aus Verbindungen, bei denen ein durch Nichtmetalle gebildetes Anion an ein MetallKation gebunden ist. Da die Ascherückstände im Laufe des üblicherweise in Dieselmotoren mit Luftüberschuss stattfindenden Motorbetriebs entstehen, weisen die in den Ascherückständen enthaltenen Elemente größtenteils eine hohe, meist die höchstmögliche Oxidationsstufe auf. Dadurch, dass den Ascherückständen ein reduzierend wirkender Stoff als Reaktionspartner zur Verfügung gestellt wird, können zumindest Teile der in den Anionen enthaltenen Nichtmetalle reduziert und dabei in flüchtige Verbindungen umgewandelt werden, die dann mit dem Abgas ausgetragen werden. Mit der Entfernung von nichtmetallischen Anteilen wird die Masse der Ascherückstände vermindert und die Aschebeladung des Partikelfilters sinkt. Damit verringert sich der Strömungswiderstand des Partikelfilters bzw. der durch diesen bewirkte Abgasgegendruck. Folglich verlängert sich die mögliche Einsatzzeit des Partikelfilters.

Als reduzierend wirkender Stoff kommt in dem genannten Zusammenhang prinzipiell jede Substanz in Frage, welche in der Lage ist, die angesprochene chemische Umwandlung zu bewirken. In erster Linie kommen reduzierend wirkende gasförmige Stoffe wie Wasserstoff, Kohlenmonoxid oder Kohlenwasserstoffe in Betracht, die dem Partikelfilter mit dem Brennkraftmaschinenabgas zugeführt werden. Vorzugsweise wird bei dem Ascheverminderungsvorgang der Partikelfilter auf eine erhöhte Temperatur von über 500° C gebracht, um den Ablauf der Zersetzungsreaktionen zu beschleunigen. Dabei ist vorgesehen, beim Ascheverminderungsvorgang in dem dem Partikelfilter zugeführten Abgas insgesamt reduzierende Bedingungen, das heißt einen Reduktionsmittelüberschuss einzustellen. Dies kann beispielsweise dadurch erreicht werden, dass dem Abgas eine ausreichend große Menge des reduzierenden Stoffes zugegeben wird.

In Ausgestaltung der Erfindung wird als reduzierend wirkender Stoff ein zum Betrieb der Brennkraftmaschine eingesetzter Kraftstoff verwendet oder der reduzierend wirkende Stoff wird aus dem Kraftstoff an Bord des Kraftfahrzeugs erzeugt. Da der zur Verbrennung vorgesehene Kraftstoff selbst reduzierend wirkt, kann er direkt als reduzierend wirkender Stoff zur Umwandlung der Ascherückstände mit dem Abgas dem Partikelfilter zugeführt werden. Ein Mineralöl-Kraftstoff wird jedoch vorzugsweise zunächst geeignet aufbereitet. Vorzugsweise besteht diese Aufbereitung in einem Crack-, Reforming- oder Vergasungsprozess. Eine Teilverbrennung unter Luftmangel ist ebenfalls möglich. Bei einer solchen Aufbereitung werden reaktionsfreudige, vorzugsweise gasförmige, reduzierend wirkende Verbindungen gebildet, die geeignet sind, Ascherückstände im Partikelfilter reduzierend zu zersetzen.

In weiterer Ausgestaltung der Erfindung wird der reduzierend wirkende Stoff von außerhalb des Abgasstrangs dem Abgas stromauf des Partikelfilters zugegeben. Die Bereitstellung des reduzierend wirkenden Stoffs kann somit weitgehend unabhängig vom Brennkraftmaschinenbetrieb erfolgen.

In weiterer Ausgestaltung der Erfindung wird der reduzierend wirkende Stoff dem Abgas durch eine Kraftstoff-Sekundäreinspritzung stromauf des Partikelfilters zugegeben. Vorteilhaft ist es hierbei, eine Kraftstoffzugabevorrichtung vorzusehen, mit welcher der Kraftstoff feinverteilt dem Abgas zugeführt werden kann. Vorzugsweise wird der Kraftstoff bei oder vor der Zugabe in den Abgasstrang wenigstens teilweise verdampft, um eine möglichst homogene Vermischung zu erhalten.

In weiterer Ausgestaltung der Erfindung wird der reduzierend wirkende Stoff in Form von unvollständig verbranntem Kraftstoff durch einen unterstöchiometrischen Betrieb der Brennkraftmaschine dem Abgas zugegeben. Beim unterstöchiometrischen Betrieb der Brennkraftmaschine, das heißt bei einem Betrieb mit Luftmangel, kann der der Brennkraftmaschine zugeführte Kraftstoff nicht vollständig verbrennen und es verbleiben unverbrannte Kraftstoffbestandteile im Abgas, die die Ascherückstände im Partikelfilter reduzierend zersetzen können. Vorzugsweise wird der unterstöchiometrische Betrieb durch eine Kraftstoffnacheinspritzung im Anschluss an eine drehmomentwirksame Kraftstoffhaupteinspritzung realisiert, so dass sich insgesamt ein Kraftstoffüberschuss ergibt. Je nach Durchführung der Nacheinspritzung können dabei unterschiedliche reduzierend wirksame Spezies dem Abgas zugegeben werden. Eine weitere Aufbereitung dieser Spezies kann an einem dem Partikelfilter vorgeschalteten Oxidationskatalysator stattfinden.

In weiterer Ausgestaltung der Erfindung wird der Strömungswiderstand des Partikelfilters überwacht, und der Ascheverminderungsvorgang wird durchgeführt, wenn der Strömungswiderstand nach Abschluss eines vorangegangenen Rußabbrandvorgangs einen vorgebbaren Wert überschreitet. Nach erfolgtem Rußabbrandvorgang kann davon ausgegangen werden, dass eine den Strömungswiderstand erhöhende Rußbeladung vom Partikelfilter entfernt wurde, so dass der Strömungswiderstand überwiegend durch die Aschebeladung bestimmt ist. Wird in diesem Fall beispielsweise anhand einer Differenzdruckmessung über dem Partikelfilter oder durch eine Messung des Abgasgegendrucks vor dem Partikelfilter festgestellt, dass der Strömungswiderstand unzulässig angestiegen ist, so wird baldmöglichst der Ascheverminderungsvorgang durchgeführt.

In weiterer Ausgestaltung der Erfindung wird der Ascheverminderungsvorgang in Verbindung mit einem Rußabbrandvorgang durchgeführt. Da bei einem Rußabbrandvorgang ohnehin erhöhte Temperaturen im Partikelfilter eingestellt werden, kann durch eine Zufuhr von reduzierend wirkenden Spezies unmittelbar vor oder unmittelbar nach der Durchführung des Rußabbrandvorgangs der Ascheverminderungsvorgang durchgeführt werden. Damit entfällt eine separate, eigens zur Durchführung des Ascheverminderungsvorgangs vorzunehmende Partikelfilteraufheizung.

In weiterer Ausgestaltung der Erfindung wird der Ascheverminderungsvorgang in Verbindung mit jedem n-ten Rußabbrandvorgang durchgeführt, wobei n eine vorgebbare positive ganze Zahl größer als eins ist. Da der Prozess der Ascheansammlung etwa um den Faktor fünf bis zehn langsamer erfolgt als der Prozess der Rußansammlung, ist es vorteilhaft, den Ascheverminderungsvorgang ebenfalls lediglich im Zusammenhang mit jedem etwa fünften bis zehnten Rußabbrandvorgang vorzunehmen. Da die Relation zwischen Rußansammlung und Ascheansammlung wenigstens annähernd bekannt ist, wird die maßgebende ganze Zahl n vorzugsweise fest vorgegeben.

Im Folgenden wird die Erfindung anhand von Zeichnungen und zugehörigen Beispielen näher erläutert. Dabei zeigen:
- Fig. 1: eine schematische Darstellung einer Brennkraftmaschine mit zugehörigem Partikelfilter und
- Fig. 2: ein Diagramm zur schematischen Darstellung des zeitlichen Verlaufs des Abgasgegendrucks bei einem Partikelfilter.

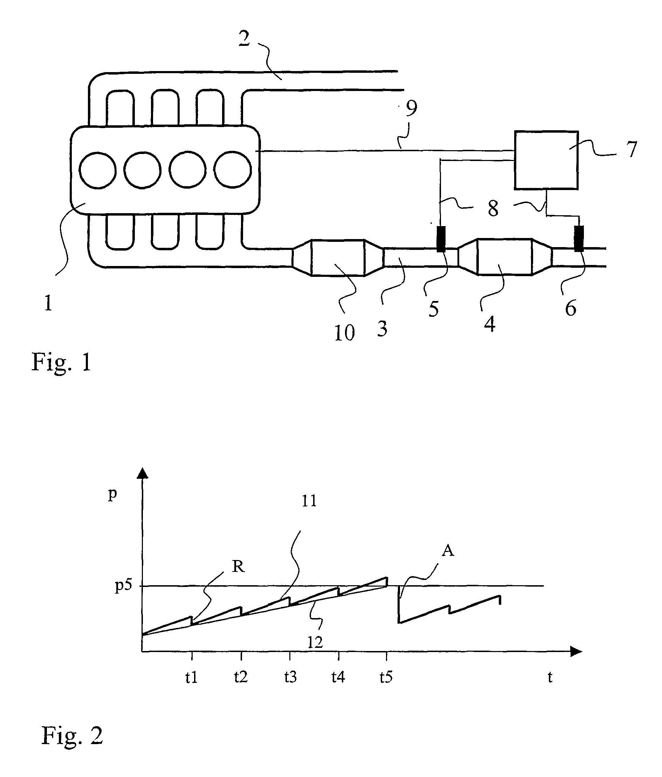

In der Fig.1 ist eine Brennkraftmaschine 1 mit einer Ansaugluftleitung 2 und einer Abgasleitung 3 dargestellt. Die Brennkraftmaschine 1 ist vorzugsweise als direkteinspritzender Dieselmotor ausgebildet.

In der Abgasleitung 3 ist ein Oxidationskatalysator 10 stromauf eines Partikelfilters 4 in der Abgasleitung 3 angeordnet. Eingangsseitig und ausgangsseitig sind Drucksensoren 5, 6 in der Abgasleitung 3 angeordnet, mit welchen der Druckverlust über dem Partikelfilter 4 ermittelt werden kann. Die Sensoren 5, 6 sind über Signalleitungen 8 an ein elektronisches Steuergerät 7 angeschlossen, das zur Steuerung bzw. Regelung des Brennkraftmaschinenbetriebs über eine Steuerleitung 9 an die Brennkraftmaschine 1 angeschlossen ist. Das Steuergerät 7 steht ferner mit weiteren hier nicht dargestellten Sensoren und Aktuatoren zur Erfassung und Einstellung des Brennkraftmaschinenbetriebs und des Fahrzustands des Kraftfahrzeugs in Verbindung.

Das Steuergerät 7 ist insbesondere in der Lage, Eingriffe in den Brennkraftmaschinenbetrieb vorzunehmen, welche eine Veränderung der Abgaszusammensetzung und eine Aufheizung des Abgases bewirken. Hierzu gehören in erster Linie Änderungen der Einspritzparameter wie Anzahl der Kraftstoffeinspritzvorgänge je Arbeitszyklus sowie Änderung von deren Zeitpunkt und Dauer. Über eine Veränderung der Einspritzmenge kann ferner die Luftverhältniszahl des in der Brennkraftmaschine 1 verarbeiteten Luft-Kraftstoffgemisches eingestellt werden, wozu entsprechende, hier nicht näher dargestellte Einstellorgane vorgesehen sind. Somit ist das Steuergerät 7 in der Lage, alle betriebsrelevanten Betriebsparameter der Brennkraftmaschine 1 und des Abgassystems zu ermitteln bzw. einzustellen. Es versteht sich, dass die Brennkraftmaschine 1 über weitere hier nicht dargestellte Komponenten, wie beispielsweise einen Abgasturbolader, eine Abgasrückführung, Temperatursensoren zur Erfassung der Temperaturen im Abgas oder im Partikelfilter 4 bzw. im Oxidationskatalysator 10 und dergleichen verfügen kann.

Von der Brennkraftmaschine 1 emittierte Rußteilchen werden während des normalen Fahrbetriebs vom Partikelfilter 4 aus dem ihm zugeführten Abgas ausgefiltert und sammeln sich dort an. Die im Partikelfilter 4 angesammelten Rußteilchen verursachen einen Anstieg von dessen Strömungswiderstand, was den Brennkraftmaschinenbetrieb beeinträchtigt. Aus diesem Grund werden von Zeit zu Zeit Rußabbrandvorgänge durchgeführt.

Die Notwendigkeit eines Rußabbrandvorgangs wird vorzugsweise aus dem über dem Partikelfilter 4 mittels der Sensoren 5, 6 ermittel-ten Druckverlust bzw. aus einem daraus abgeleiteten Wert für den Strömungswiderstand oder der Beladung des Partikelfilters 4 festgestellt. Es können jedoch auch Rußabbrandvorgänge in vorgegebenen Abständen vorgesehen sein.

Ein Rußabbrandvorgang umfasst eine Aufheizung des Abgases und des Partikelfilters 4 derart, dass die Verbrennungstemperatur von etwa 550° C des im Partikelfilter 4 abgelagerten Rußes erreicht bzw. überschritten wird.

Zur Aufheizung des Abgases und des Partikelfilters 4 können eine Vielzahl von Maßnahmen, insbesondere von Eingriffen in den Brennkraftmaschinen getroffen werden. Vorzugsweise werden die Parameter der Kraftstoffeinspritzung verstellt. Beispielsweise kann durch eine frühe Nacheinspritzung von Kraftstoff in die ausklingende Verbrennung erreicht werden, dass die Temperatur des von der Brennkraftmaschine ausgestoßenen Abgases erhöht wird. Mittels einer späten Nacheinspritzung von Kraftstoff kann erreicht werden, dass unverbrannte Kraftstoffbestandteile im Abgas enthalten sind, welche im Oxidationskatalysator 10 unter Freisetzung von Reaktionswärme nachverbrannt werden. Ferner kann durch weitere begleitende Eingriffe, wie Verstellung der Abgasrückführung oder durch eine Androsselung die von der Brennkraftmaschine abgegebene Leistung erhöht werden, was die Abgastemperatur ebenfalls steigert. Dabei ist es erforderlich, eine oxidierende Abgaszusammensetzung aufrechtzuerhalten, was jedoch für den Betrieb eines Dieselmotors ohnehin typisch ist. Die erzielte erhöhte Temperatur wird mit Hilfe dieser Maßnahmen vorzugsweise solange aufrechterhalten, wie dies zum Abbrennen des abgelagerten Rußes notwendig ist. Dadurch vermindert sich die Rußbeladung des Partikelfilters 4. Entsprechend vermindert sich sein Strömungswiderstand bzw, der Druckverlust über dem Partikelfilter 4, so dass ein ordnungsgemäßer Betrieb der Brennkraftmaschine 1 wiederhergestellt wird.

Beim normalen Betrieb der Brennkraftmaschine werden jedoch neben Rußpartikeln auch andere Teilchen im Partikelfilter angesammelt, welche durch einen Rußabbrandvorgang nicht mehr entfernt werden können. Diese nichtbrennbaren Teilchen bilden einen allgemein mit Asche bezeichneten Rückstand im Partikelfilter, der ebenfalls zu einem allmählichen Anstieg seines Strömungswiderstands führt und den durch die Rußbeladung verursachten Anstieg des Strömungswiderstands überlagert.

Eigentliche Quelle der Ascherückstände sind hauptsächlich anorganische Bestandteile von Öladditiven oder von Kraftstoffadditiven, aber auch ein durch Abrieb verursachter Austrag von kleinen Teilchen metallischen Charakters. Diese Substanzen enthalten sowohl Metalle als auch Nichtmetalle in gebundener Form. Mit einer Elementaranalyse von Ascherückständen kann festgestellt werden, dass die Elemente Calcium (Ca), Magnesium (Mg), Eisen (Fe) und Zink (Zn) meist den Hauptteil der metallischen Aschebestandteile ausmachen. Bei den nichmetallischen Elementen überwiegen neben Sauerstoff (O) Schwefel (S) und Phosphor (P). Die im Partikelfilter abgelagerten Ascherückstände bestehen daher hauptsächlich aus Sulfaten wie Calciumsulfat (CaSO₄) und Phosphaten wie Magnesium-Zink-Mischphosphaten. Reine Oxide wie Eisenoxid sind ebenfalls Bestandteil der Ascherückstände.

Die im Diagramm der Fig. 2 schematisch dargestellten Verhältnisse verdeutlichen den Vorgang der Beladung des Partikelfilters 4 mit Ruß- und Ascheteilchen. In diesem Diagramm ist der zeitliche Verlauf des über dem Partikelfilter 4 vorhandenen Druckverlustes p vereinfacht dargestellt. Es ergibt sich üblicherweise ein etwa sägezahnartiger Verlauf entsprechend der Kurve 11. Infolge von Rußabbrandvorgängen R zu den Zeitpunkten t1, t2, usw. wird der zuvor durch Rußablagerung erfolgte Anstieg des Druckverlustes p teilweise wieder rückgängig gemacht. Insgesamt ergibt sich jedoch dennoch ein allmählicher Anstieg des Druckverlustes p, entsprechend der Verbindungslinie 12 der lokalen Minima der Druckverlustkurve 11. Dieser allmähliche Anstieg des Druckverlustes p ist auf die zunehmende Ablagerung von Ascherückständen im Partikelfilter 4 zurückzuführen.

Auf diese Weise nähert sich der Druckverlust p über dem Filter allmählich einem vorgebbaren Grenzwert p5 an, bei welchem der Druckverlust p eine nicht mehr tolerierte Größe erreicht. Auch durch einen zum Zeitpunkt t5 durchgeführten Rußabbrandvorgang gelingt es nicht mehr, den Grenzwert p5 zu unterschreiten. Damit ist ohne weitere Maßnahmen die Lebensdauer des Partikel-filters 4 erreicht und es erfolgt üblicherweise ein Tausch des Partikelfilters 4 oder eine spezieller Reinigungsvorgang, beispielsweise durch Ausblasen oder Ausspülen der angesammelten Ascherückstände in einem speziellen Wartungsvorgang oder am ausgebautem Partikelfilter 4.

Die Lebensdauer des Partikelfilters 4 kann jedoch auch während des normalen Fahrzeugbetriebs verlängert werden, wenn beispielsweise zum Zeitpunkt t5 ein erfindungsgemäßer Ascheverminderungsvorgang A durchgeführt wird. Ein solcher Ascheverminderungsvorgang A besteht im wesentlichen darin, dass dem Partikelfilter 4 während des Betriebs der Brennkraftmaschine mit dem Abgas ein geeigneter, reduzierend wirkender Stoff zugeführt wird, welcher wenigstens mit Teilen der Ascherückstände eine Reaktion eingeht, so dass dabei wenigstens Teile der nichtmetallischen Bestandteile der Asche in flüchtige Verbindungen überführt und mit dem Abgas ausgetragen werden. Insbesondere werden wenigstens Teile der Phosphate und/oder der Sulfate zersetzt. Dabei bilden sich vorzugsweise die entsprechenden Carbonate oder Oxide.

Infolge des Ascheverminderungsvorgangs A wird die Masse der im Partikelfilter 4 verbleibenden Asche vermindert und es stellt sich wieder ein deutlich unterhalb des Grenzwertes p5 liegender Druckverlust p ein. Folglich kann der Partikelfilter 4 weiterhin im Einsatz bleiben. Im Fall der in Fig. 2 darge-stellten Verhältnisse wurde wie erwähnt der Ascheverminde-rungsvorgang A in kurzem zeitlichen Abstand nach einem zum Zeitpunkt t5 erfolgten Rußabbrandvorgang R durchgeführt, was das dargestellte steile Absinken des Druckverlustes p zur Folge hat.

Bevor auf vorteilhafte Möglichkeiten zur Durchführung eines Ascheverminderungsvorgangs A eingegangen wird, wird die dabei erreichbare Massen-Verminderung der im Partikelfilter 4 angesammelten Ascherückstände durch folgende einfache Überlegungen abgeschätzt.

Beispielhaft wird von der Annahme ausgegangen, dass durch den reduzierend wirkenden Stoff Magnesiumphosphat Mg₃(PO₄)₂ unter Bildung von Magnesiumoxid MgO zersetzt wird und Phosphor mit dem Abgas ausgetragen und aus dem Partikelfilter entfernt wird. Entsprechend den Molmassenverhältnissen ergibt sich hierbei eine Masseverminderung um 54 %. Analog ergibt sich ausgehend von Zinkphosphat Zn₃(PO₄)₂ bei der Zersetzung zu Zinkoxid ZnO eine Massenverminderung um 37 %. Bei der Zersetzung von Calciumsulfat CaSO₄ unter Bildung von Calciumcarbonat CaCO₃ ergibt sich eine Masseverminderung um 27 % und der an Calcium gebundene Schwefel wird mit dem Abgas ausgetragen.

Mit der Verminderung der Masse der im Partikelfilter 4 abgelagerten Ascherückstände geht eine entsprechend große Verminderung des Druckverlusts p über dem Partikelfilter einher. Dieser kann sogar überproportional groß ausfallen, da infolge der im Ascherückstand ablaufenden Reaktionen deren Konsistenz bzw. Morphologie derart verändert wird, dass sich eine höhere Gasdurchlässigkeit einstellt.

Nachfolgend wird unter Bezug auf Fig. 1 auf vorteilhafte Möglichkeiten der Durchführung eines Ascheverminderungsvorgangs eingegangen.

Zur Durchführung des Ascheverminderungsvorgangs wird der Partikelfilter 4, falls er nicht bereits eine entsprechende Temperatur aufweist, auf eine nachfolgend als Aschezersetzungstemperatur bezeichnete Mindesttemperatur aufgeheizt. Hiefür können übliche bekannte, beispielsweise die bereits weiter oben genannten Maßnahmen ergriffen werden, weshalb an dieser Stelle darauf nicht näher eingegangen wird. Die Aschezersetzungstemperatur ist dabei abhängig von dem für die reduzierende Aschezersetzung eingesetzten reduzierend wirkenden Stoff und liegt typischerweise oberhalb von 400° C, vorzugsweise bei etwa 600° C bis 700° C.

Nach Erreichen der Aschezersetzungstemperatur wird dem Abgas stromauf des Partikelfilters 4 ein reduzierend wirkender Stoff zugegeben, der geeignet ist, durch chemische Reaktionen wenigstens nichtoxidische Aschebestandteile derart zu zersetzen, dass hierbei in diesen Aschebestandteilen vorhandene nichtmetallische Elemente in flüchtige Verbindungen überführt, vorzugsweise reduziert, und mit dem Abgas ausgetragen werden. Die zersetzbaren Aschebestandteile umfassen dabei typischer-weise Phosphate und Sulfate. Durch die Reaktion mit dem zuge-führten reduzierend wirkenden Stoff wird die Oxidationsstufe des Phosphors bzw. Schwefels herabgesetzt, wodurch diese Elemente in einen flüchtigen Zustand versetzt werden. Dabei ist es vorgesehen, eine insgesamt reduzierend wirkende Atmosphäre, das heißt einen Luftmangel im Partikelfilter 4 einzustellen.

Als reduzierend wirkender Stoff kommt hauptsächlich ein gasförmiges Reduktionsmittel wie Wasserstoff, Kohlenmonoxid, Ammoniak oder Kohlenwasserstoffe, bzw. Mischungen derselben in Frage. Die Bereitstellung dieser Stoffe kann außerhalb des Abgasstrangs, beispielsweise durch Entnahme aus einem Vorratsbehälter erfolgen. Besonders vorteilhaft ist es jedoch, das Reduktionsmittel aus dem im Fahrzeug mitgeführten Kraftstoff onboard zu erzeugen. Nachfolgend wird davon ausgegangen, dass es sich bei dem Kraftstoff um einen kohlenwasserstoffhaltigen Mineralölkraftstoff handelt. Zur Extrahierung von gasförmigen Reduktionsmitteln der oben genannten Art aus dem Kraftstoff kann ein in Fig. 1 nicht dargestellter Reaktor vorgesehen sein, in welchem der Kraftstoff entsprechend aufbereitet wird. Der Reaktor ist vorzugsweise so ausgelegt, dass hier ein Reforming- Spalt- oder Crackprozess abläuft, mittels welchem wenigstens Teile der genannten Reduktionsmittel aus dem Kraftstoff gebildet werden. Diese werden zum Zwecke der reduktiven Aschezersetzung in die Abgasleitung geführt. Hierzu ist es zweckmäßig, eine in Fig. 1 nicht dargestellte geeignete Zuführungseinrichtung vorzusehen, die eingangsseitig des Oxidationskatalysators 10 und/oder des Partikelfilters 4 angeordnet ist.

Ebenfalls möglich ist es, den Kraftstoff in einer Sekundäreinspritzung dem Abgas an den genannten Zugabestellen, insbesondere in fein verteilter Form direkt zuzugeben. Besonders vorteilhaft ist es, den Kraftstoff vor oder bei der Zugabe ins Abgas wenigstens teilweise zu verdampfen, wodurch eine homogene Verteilung im Abgas erreicht wird.

Weiter kann vorgesehen sein, den Kraftstoff in der Brennkraftmaschine 1 derart aufzubereiten, dass das Abgas reaktive Spezies enthält, welche eine reduktive Zersetzung der phosphat - und/oder sulfathaltigen Aschebestandteile bewirken. Hierzu ist es vorteilhaft, eine insgesamt reduzierende Verbrennung in der Brennkraftmaschine 1 einzustellen. Insbesondere ist es in diesem Zusammenhang vorteilhaft, dies durch eine frühe und/oder eine späte Nacheinspritzung von Kraftstoff in den Brennraum der Brennkraftmaschine 1 im Anschluss an die der Drehmomenterzeugung dienende Kraftstoffhaupteinspritzung zu bewirken. Bei dieser Art von Kraftstoffaufbereitung findet innermotorisch ebenfalls ein Crackprozess oder eine unvollständige Verbrennung statt, bei welcher entsprechend reaktive Spezies gebildet und dem Abgas zugegeben werden. Dabei werden bei einer frühen Nacheinspritzung überwiegend niedermolekulare Reduktionsmittel wie Wasserstoff, Kohlenmonoxid und kurzkettige, gegebenenfalls ungesättigte Kohlenwasserstoffe erzeugt. Bei einer späten Nacheinspritzung werden dagegen eher höhermolekulare Reduktionsmittel, wie längerkettige Kohlenwasserstoffe erzeugt, die im Sinne der reduktiven Aschezersetzung ebenfalls sehr wirksam sein können.

Im Zusammenhang mit einer Nacheinspritzung in den Brennraum der Brennkraftmaschine 1 aber auch bei einer Sekundäreinspritzung von Kraftstoff stromauf des Oxidationskatalysators 10 können an diesem weitere Reformingprozesse oder eine Wassergas-Shiftreaktion ablaufen, welche insbesondere bei einem insgesamt reduzierenden, fetten Abgas eine starke Anreicherung an Wasserstoff im Abgas zur Folge haben. Der dabei vermehrt erzeugte Wasserstoff kann als starkes Reduktionsmittel die nichtmetallhaltigen Aschebestandteile im Partikelfilter 4 besonders wirksam zersetzen.

Vorteilhaft ist es, den Ascheverminderungsvorgang im Zusammen-hang mit einem Rußabbrandvorgang vorzunehmen, weil in diesem Fall die für die Aschezersetzung vorzugsweise einzustellende erhöhte Temperatur üblicherweise ohnehin zum Rußabbrand eingestellt werden muss. Im Gegensatz zu dem naturgemäß ausschließlich unter oxidierenden Bedingungen ablaufenden Rußabbrandvorgang wird jedoch für den Ascheverminderungsvorgang vorzugsweise eine reduzierende Atmosphäre im Partikelfilter 4 eingestellt. Die reduzierenden Bedingungen des Ascheverminderungsvorgangs können dabei kurz vor dem Rußabbrandvorgang oder aber auch im Anschluss an den Rußabbrandvorgang eingestellt werden.

Da die Ascheablagerung im allgemeinen deutlich langsamer erfolgt als die Ablagerung von Rußteilchen, ist vorteilhaft, den Ascheverminderungsvorgang nur bei Bedarf im Zusammenhang mit dem Rußabbrandvorgang vorzunehmen. Es kann deshalb vorgesehen sein, die Häufigkeit der Ascheverminderungsvorgänge in Abhängigkeit von der Häufigkeit der Rußabbrandvorgänge vorab festzulegen. Beispielsweise kann vorgegeben werden, bei jedem fünften oder jedem zehnten, allgemein jedem n-ten Rußabbrandvorgang einen Ascheverminderungsvorgang vorzunehmen. Ist die Möglichkeit gegeben, bei der Ermittlung des Druckverlustes p über dem Partikelfilter 4 zwischen dem durch die Rußbeladung und dem durch die Aschebeladung verursachten Anteil zu unterscheiden, so kann auch vorgesehen sein, die Durchführung eines Ascheverminderungsvorgang von dem Anteil des Druckverlustes p abhängig zu machen, der nur durch die Aschebeladung des Partikelfilters 4 verursacht ist.

## Patentansprüche

1. Verfahren zum Betreiben eines Partikelfilters (4) im Abgasstrang einer Brennkraftmaschine (1) eines Kraftfahrzeugs, wobei für den Partikelfilter (4) wiederkehrende Rußabbrandvorgänge vorgesehen sind
**dadurch gekennzeichnet, dass**
in einem Ascheverminderungsvorgang (A) die Masse der nach einem Rußabbrand im Partikelfilter verbleibenden nichtbrennbaren Ascherückstände vermindert wird, indem dem Partikelfilter (4) mit dem Abgas der Brennkraftmaschine (1) ein reduzierend wirkender Stoff zugeführt und mit den Ascherückständen derart zur Reaktion gebracht wird, dass die Ascherückstände chemisch umgewandelt werden und dabei wenigstens nichtmetallische Bestandteile der Ascherückstände mit dem Abgas aus dem Partikelfilter (4) entfernt werden.

2. Verfahren nach Anspruch 1,
**dadurch gekennzeichnet, dass**
als reduzierend wirkender Stoff ein zum Betrieb der Brennkraftmaschine (1) eingesetzter Kraftstoff verwendet wird oder der reduzierend wirkende Stoff aus dem Kraftstoff an Bord des Kraftfahrzeugs erzeugt wird.

3. Verfahren nach Anspruch 1 oder 2,
**dadurch gekennzeichnet, dass**
der reduzierend wirkende Stoff von außerhalb des Abgasstrangs (3, 4, 10) dem Abgas stromauf des Partikelfilters (4) zugegeben wird.

4. Verfahren nach Anspruch 2 oder 3,
**dadurch gekennzeichnet, dass**
der reduzierend wirkende Stoff dem Abgas durch eine Kraftstoff-Sekundäreinspritzung stromauf des Partikelfilters (4) zugegeben wird.

5. Verfahren nach Anspruch 1 oder 2,
**dadurch gekennzeichnet, dass**
der reduzierend wirkende Stoff in Form von unvollständig verbranntem Kraftstoff durch einen unterstöchiometrischen Betrieb der Brennkraftmaschine (1) dem Abgas zugegeben wird.

6. Verfahren nach einem der vorangehenden Ansprüche,
**dadurch gekennzeichnet, dass**
der Strömungswiderstand des Partikelfilters (4) überwacht wird, und der Ascheverminderungsvorgang (A) durchgeführt wird, wenn der Strömungswiderstand nach Abschluss eines vorangegangenen Rußabbrandvorgangs (R) einen vorgebbaren Wert überschreitet.

7. Verfahren nach einem der vorangehenden Ansprüche,
**dadurch gekennzeichnet, dass**
der Ascheverminderungsvorgang (A) in Verbindung mit einem Rußabbrandvorgang (R) durchgeführt wird.

8. Verfahren nach einem der vorangehenden Ansprüche,
**dadurch gekennzeichnet, dass**
der Ascheverminderungsvorgang (A) in Verbindung mit jedem n-ten Rußabbrandvorgang durchgeführt wird, wobei n eine vorgebbare positive ganze Zahl größer als eins ist.

## Claims

1. Method of operating a particle filter (4) in the exhaust gas train of an internal combustion engine (1) of a motor vehicle, whereby repeated soot burning operations are run for the particle filter (4),
**characterised in that**
in an ash reducing operation (A), the mass of non-combustible ash residues left behind in the particle filter (4) after a soot burn-off is reduced by supplying a substance with a reducing effect to the particle filter (4) together with the exhaust gas from the internal combustion engine (1) and causing a reaction with the ash residues so that the ash residues are chemically transformed and at least non-metallic elements of the ash residues are removed from the particle filter (4) with the exhaust gas.

2. Method as claimed in claim 1,
**characterised in that**
the substance with a reducing effect is a fuel used to operate the internal combustion engine (1) or the substance with a reducing effect is generated from the fuel carried on board the motor vehicle.

3. Method as claimed in claim 1 or 2,
**characterised in that**
the substance with a reducing effect is added to the exhaust gas outside of the exhaust gas train (3, 4, 10) upstream of the particle filter (4).

4. Method as claimed in claim 2 or 3,
**characterised in that**
the substance with a reducing effect is added to the exhaust gas by a secondary fuel injection upstream of the particle filter (4).

5. Method as claimed in claim 1 or 2,
**characterised in that**
the substance with a reducing effect is added to the exhaust gas in the form of incompletely combusted fuel due to operating the internal combustion engine (1) at below stoichiometric conditions.

6. Method as claimed in one of the preceding claims,
**characterised in that**
the flow resistance of the particle filter (4) is monitored and the ash reducing operation (A) is run if the flow resistance after a preceding soot burning operation (R) exceeds a pre-definable value.

7. Method as claimed in one of the preceding claims,
**characterised in that**
the ash reducing operation (A) is run in conjunction with a soot burning operation (R).

8. Method as claimed in one of the preceding claims,
**characterised in that**
the ash reducing operation (A) is run in conjunction with every n-th soot burning operation, where n is a pre-definable positive whole number greater than one.

## Revendications

1. Procédé pour le fonctionnement d'un filtre à particules (4) dans le conduit d'échappement d'un moteur à combustion interne (1) d'un véhicule automobile, des combustions répétées de suie étant prévues pour le filtre à particules (4),
**caractérisé en ce que**
la masse des cendres résiduelles demeurée dans le filtre à particules après une combustion de suie est diminuée par un processus de réduction des cendres (A), en appliquant une substance à action réductrice sur le filtre à particules (4) avec les gaz d'échappement du moteur à combustion interne (1) et une réaction étant générée avec les cendres résiduelles, de manière à convertir chimiquement les cendres résiduelles et à évacuer du filtre à particules (4) au moins les composants non métalliques des cendres résiduelles avec les gaz d'échappement.

2. Procédé selon la revendication 1,
**caractérisé en ce que**
un carburant utilisé pour le fonctionnement du moteur à combustion interne (1) est utilisé comme substance à action réductrice, ou bien **en ce que** la substance à action réductrice est générée à partir du carburant à bord du véhicule automobile.

3. Procédé selon la revendication 1 ou la revendication 2,
**caractérisé en ce que**
la substance à action réductrice est ajoutée aux gaz d'échappement depuis l'extérieur du conduit d'échappement (3, 4, 10), en amont du filtre à particules (4).

4. Procédé selon la revendication 2 ou la revendication 3,
**caractérisé en ce que**
la substance à action réductrice est ajoutée aux gaz d'échappement par une injection secondaire de carburant en amont du filtre à particules (4).

5. Procédé selon la revendication 1 ou la revendication 2,
**caractérisé en ce que**
la substance à action réductrice est ajoutée aux gaz d'échappement sous la forme de carburant non entièrement comburé, par fonctionnement sous-stoechiométrique du moteur à combustion interne (1).

6. Procédé selon l'une des revendications précédentes,
**caractérisé en ce que**
la résistance à l'écoulement du filtre à particules (4) est surveillée, et **en ce que** le processus de réduction des cendres (A) est exécuté si la résistance à l'écoulement dépasse une valeur définie à l'issue d'une combustion de suie (R) antérieure.

7. Procédé selon l'une des revendications précédentes,
**caractérisé en ce que**
le processus de réduction des cendres (A) est exécuté en liaison avec une combustion de suie (R).

8. Procédé selon l'une des revendications précédentes,
**caractérisé en ce que**
le processus de réduction des cendres (A) est exécuté en liaison avec chaque n^{ième} combustion de suie, n étant un nombre prescriptible, entier positif supérieur à un.
